# EUROPEAN PATENT APPLICATION

(11) **EP 2 653 793 A1**
(43) Date of publication of application: **23.10.2013**
(21) Application number: 12166971.7
(22) Date of filing: 07.05.2012
(51) Int. Cl.: F24D 11/02

(54) **Method and arrangement for recovering energy in an apartment building**

(30) Priority: 06.05.2011 FI 20115430
(71) Applicant: RECAIR OY, 04300 Tuusula (FI)
(72) Inventor: Kähärä, Aleksi, 04300 Tuusula (FI); Perunka, Olli, 04300 Tuusula (FI); Juvonen, Markus, 04300 Tuusula (FI)
(74) Representative: Arvela, Sakari Mikael

(57) **Abstract**

The publication discloses a method and arrangement for recovering lost energy in buildings. In the method heat energy is recovered by means of at least one heat recovery apparatus (LTO) arranged in the exhaust air flow and the recovered heat energy is transferred by means of heat exchange medium into the hot water system of the building. According to the method the recovered heat energy is transferred via at least one evaporator (HÖ) through an evaporation/compression cycle to heat the water used in the building. The invention allows heat recovery advantageously in old buildings as well.

## Description

The present invention relates to a method of and an arrangement for recovering lost energy in houses, especially in apartment buildings without a previously arranged energy recovery from the exhaust air of the building.

In order to provide sufficient ventilation in residential buildings air must be exhausted from inside the building and it must be replaced by fresh exchange air. In cold areas the exhaust air is for a large part of the year warmer than the air outdoors and it contains heat energy. In newer buildings the expelled air is directed through heat recovery apparatuses in order to transfer the energy contained by the exhaust air to be used by the building, allowing reduction of the energy consumption of the building. Often old buildings are not equipped with exhaust air heat recovery. The reason can be, e.g. the unsuitability of the ventilation system of the building for current apparatuses or the economical unprofitability of the investment in apparatuses due to lack of suitable apparatuses. Often also the adjustment and control system of the HVAC system would require updating by means of which the living comfort and energy efficiency could be improved. The purpose of the system is to transfer lost heat from the exhaust air or from another system containing unused lost energy to the hot water and heating systems of the building. The system is primarily meant for apartment buildings over 10 years of age having no exhaust air heat recovery. An application of the invention are especially buildings in which the primary heating system is district heating and that do not comprise a dedicated ventilation machine room and/or building automation system. The invention can also be applied to other heating forms, if necessary.

Various heat recovery and heating systems are described in publications WO 2009/00974, SE 525579, US 20070095519, FI 604439 and DE 19702903. Heat recovery from especially exhaust air is described in publications SE 431018 and SE 531128.

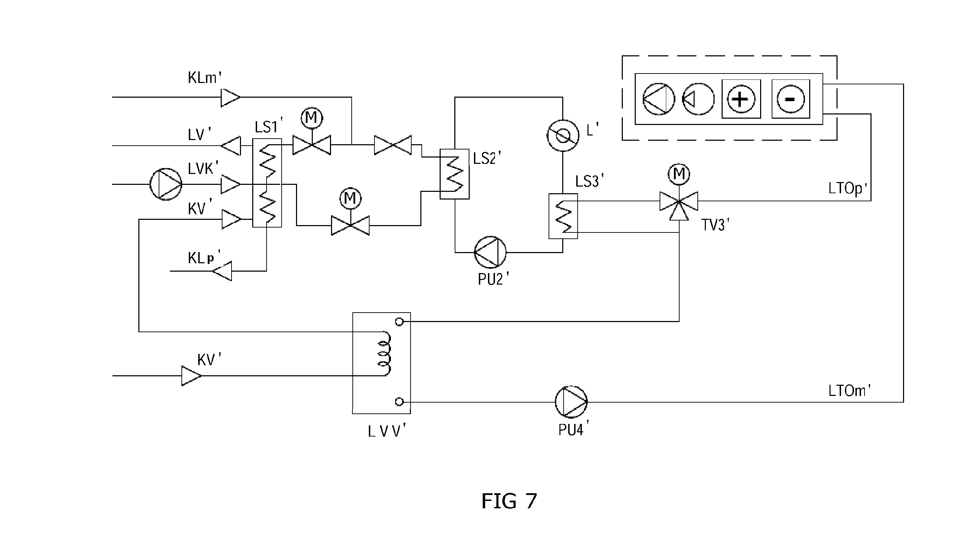

In one known system, the principle of which is illustrated in Figure 7, energy is recovered from exhaust air, subsequent to which the heat is transferred to the heating and hot water network. The unit located on the roof of the building contains a compressor circuit (refrigerant circuit) in connection with which there is an evaporator and a condenser. The external unit transfers energy to the LTO (heat recovery) circuit by means of these. Water is used as heat exchange liquid of the LTO circuit. The water returns from the external unit to the heat center along return pipe lines to three-way valve TV3'. By means of the valve the return water can be directed to the heat exchanger LS3' or the recovered energy can be directed to bypass it. Subsequent to this the energy is stored in the hot water accumulator LVV'. A spiral for preheating all warm hot water of the building passes through the accumulator.

In the above-mentioned system there are a number of heat circulation and transfer circuits, making the system a complex one. In this solution energy is recovered from the air to the refrigerant circuit, subsequent to which the heat is transferred to the LTO circuit, wherefrom it is transferred via an exchanger to the heating circuit of the building or via a spiral to the preheating of the hot water.

A disadvantage of the known technology is that it is difficult to apply to distributed heat recovery, it needs specially dedicated spaces and, e.g. a connection to an external building automation system. It is also difficult to control optimal utilization of the recovered energy with known solutions.

Nowadays, it is not a problem in known systems to recover energy from exhaust air, the earth or another heat source by means of a heat pump or other such cold circuit. The larger challenge lies in transferring the recovered energy into the heating and hot water network of the building. In an efficient energy transfer consideration must be given to the amounts, temperature levels and apparatus efficiencies of the indirect circuits by means of which the recovered energy is returned to be used by the requirements of the building. There are numerous basic solutions that can be considered common knowledge.

The aim of the invention is to provide an exhaust air heat recovery system that can be more advantageously located in buildings with no previous utilization of exhaust air heat recovery system.

According to an advantageous embodiment of the invention an energy accumulator, such as a hot water accumulator, into which the recovered energy is collected, is used as the heat recovery central unit.

According to an embodiment of the invention the aim is to produce a modular system which can provided in connection with a number of distributed heat recovery points.

According to an embodiment the aim is to provide a system that can be used in houses provided with a district heating system.

Further, according an advantageous embodiment the aim is to provide a system in which the heat recovery is enhanced by collecting heat energy from the warm return water of the district heating.

Further, according to an advantageous embodiment of the invention the aim is to provide a system with no need for an external building automation system.

According to an interesting embodiment the aim is to improve the ventilation of a building having natural ventilation.

The invention is based on arranging at least one heat recovery apparatus in the exhaust air flow of the building, the apparatus directing the collected heat energy by means of a heat transfer medium via at least one evaporator with an evaporation/compressing cycle to warm the water used in the building, i.e. the heat energy is utilized in the hot water system of the building. The water to be warmed can be either household hot water and/or heating water of the building. The recovered heat is transferred into an energy accumulator by means of a heat exchanger, the heat energy needed at least by the hot water system or the heating water system of the building being taken from the accumulator as needed.

According to an embodiment of the invention the heat energy is transferred into the hot water accumulator without mixing the heat exchange medium of the heat recovery apparatus into the water of the hot water accumulator.

According to an embodiment the heat energy is transferred from the heat recovery apparatus to the hot water accumulator by circulating the water of the hot water accumulator via the evaporator of the heat recovery apparatus.

According to an embodiment water is taken to the evaporator of the heat recovery apparatus from the lower portion of the hot water accumulator and the heated water is returned to the upper portion of the accumulator.

According to an embodiment the heat energy collected by means of the heat recovery apparatus is recovered only by means of the said evaporation/compression cycle, i.e. into one circuit. The energy is thus not shared with any other accumulator or circulation connected in parallel or in series with the evaporation/compression cycle.

According to one embodiment of the invention the evaporator and the evaporation/compression cycle are formed into an internal unit into which at least two heat recovery apparatuses are connected.

According to an advantageous embodiment the heat recovery apparatuses are installed in parallel connection.

According to an advantageous embodiment the internal unit is connected to the heating circuit of the building.

According to an embodiment the internal unit is connected to the heating circuit and the hot water accumulator using a connection by means of which the connection can be made as desired.

According to an especial embodiment the recovered energy is transferred according to an optimization program either to the hot water or the hot water circulation of the building.

According to one embodiment the hot water accumulator is heated in an optimized way according to a consumption profile dimensioned for the building.

More specifically, the method and arrangement according to the invention are characterized by what is disclosed in the independent claims.

Considerable advantages are achieved by means of applications of the invention.

In a system according to the invention, energy is recovered into a glycol circuit, subsequent to which it is transferred into a refrigerant circuit after which it is directly transferred into the heating network circuit. The heating network circuit also acts as an accumulating circuit. The system can be designed to work with all common connection alternatives approved by energy companies and the compatibility of the system with all connections is secured by adding a sufficient amount of by-passes (three-way valves) arranged to the pipelines and devices by means of which the cooling required for the return pipes KLp of the district heating can be ensured.

One great advantage of the invention is the reduction of the energy costs of the building. The system according to the invention can be arranged in locations with no building automatization and/or ventilation machinery room. The system is delivered as a completely ready packet. Maintenance costs are very small and the system is nearly maintenance-free. The energy savings are considerable if the building is large enough and the basic requirements for installing the system are provided. With natural ventilation the solution clearly improves the quality of indoor air by adding a mechanical ventilation. The installation of the system is fast (one to three weeks) with no adverse effects to the inhabitants. With the exception some short heating and hot water outages the daily life of the inhabitants is not interrupted and the building is habitable as usual during the whole installation. In connection with the installation of the system the wishes of the inhabitants or the owners of the apartments can be taken into consideration and the operation of the ventilation can be optimized as desired by the inhabitant. Because of this the system utilizises EC fans using DC motor technology. EC fans can be adjusted steplessly and their efficiency is good even at partial power levels.

The invention allows distributed heat recovery from a number of energy sources, such as a number of stairwell-specific exhaust air ducts and it can optimally manage the utilization of the energy produced by the above-mentioned number of distributed heat recovery points by means of a centralized internal unit. Thus the internal unit can be used for optimizing the operation of the system. The system can utilize the existing air ducts of the building and there is no need to build new ones, neither is there a need for an external building automation system for controlling the operation in an optimal way. The system according to the invention can be installed in buildings with no separate space reserved for the purpose (VAC machinery room) and there is no need for an externally installed VAC machinery room. The invention improves the ventilation of a building provided with a natural ventilation making the ventilation independent of external weather conditions.

In the following, the invention is examined by means of examples and by reference to the appended drawing / drawings.
Figure 1 is a schematic illustration of the operation principle of the invention showing an exemplary connection.
Figure 2 illustrates a detail of an advantageous embodiment of the invention.
Figure 3 illustrates a detail of an embodiment of the invention.
Figure 4 illustrates another detail of an embodiment of the invention.

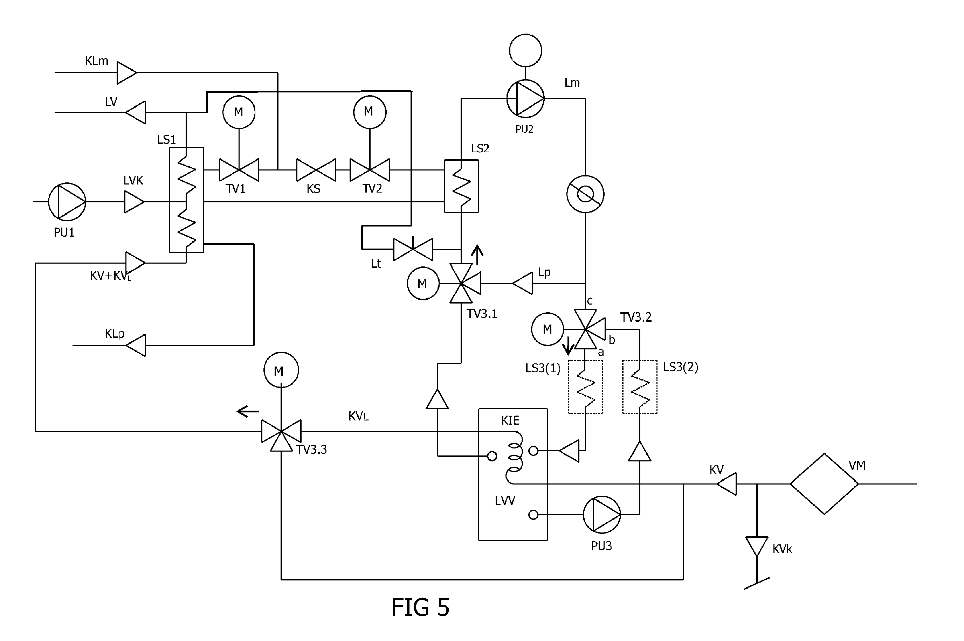

Figure 5 is a schematic illustration of another embodiment according to the invention.
Figure 6 is a schematic illustration of another embodiment according to the invention.
Figure 6.1 illustrates the solution of figure 6 complemented by an optional embodiment.
Figure 7 is an illustration of a known solution.

The following is a general description of the invention. The abbreviations used in the description refer to the markings in the drawings and they are always explained when the abbreviation is mentioned for the first time.

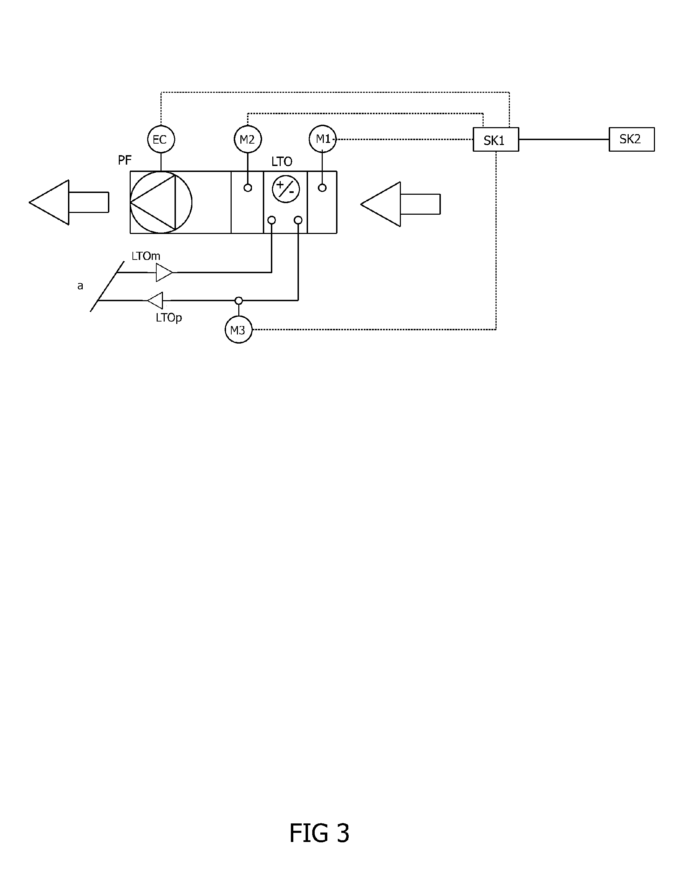

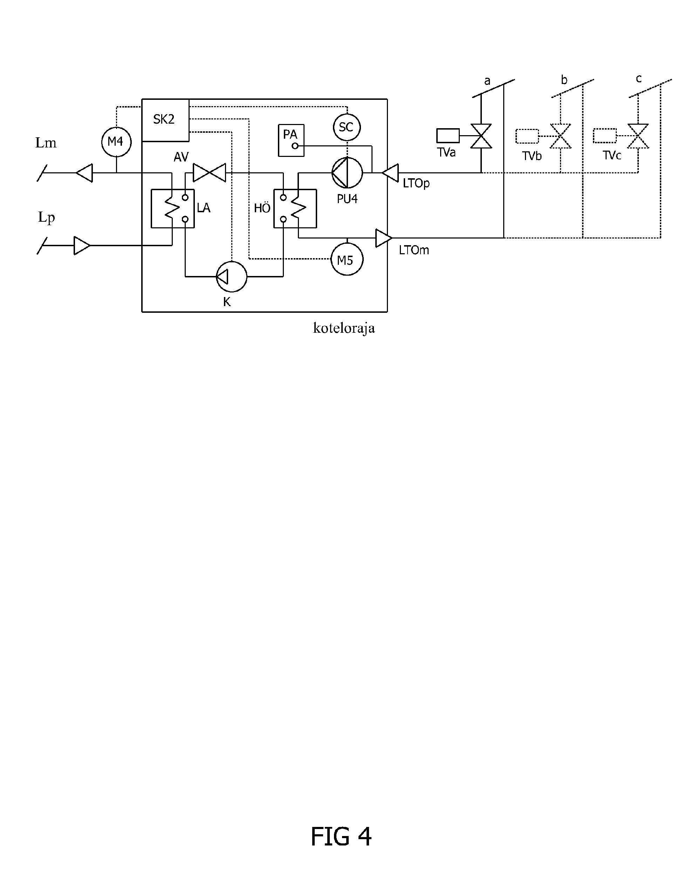

The system comprises at least two main components. A so-called external unit (figure 3) is located on the roof of the building, or in case the exhaust air duct is located elsewhere, in connection with the duct, the unit being arranged instead of the existing air expulsion system or in connection therewith. The purpose of the external unit is to collect heat energy from the used air blown away from the building and to transfer the heat into the glycol circuit of the heat recovery. Another main component is the internal unit (figure 4) located in the heat distribution room. The aim of the internal unit is to transfer the recovered heating energy with as good an efficiency as possible back to the hot water and heating systems of the building. A number of external units or another energy source from which recovery of heat is worthwhile can be used as energy sources of the internal unit.

The main principle of the recovery is that the external units collect exhausted heat via lamella radiators and transfer the energy into the heat recovery circuit. From the external units an LTO (heat recovery) pipeline runs to the internal unit. The internal unit transfers the heat energy recovered in the solution into the heating system of the building by increasing the temperature by means of a heat pump based on evaporation/compression cycle. Subsequent to this the liquid being used is hot enough to be returned back to the hot water and heating systems of the building. As the temperature of the heat exchange liquid from the heat recovery apparatus is in normal conditions low compared to the temperature necessary for the hot water or heating water, the temperature must be increased by means of a heat pump so that the recovered heat energy can be transferred into the water circulation of the building. Here the water circulation of the building means both the heating circulation and the circulation of hot water.

The heat transfer back to the systems of the building preferably takes place via an energy accumulator. The purpose of the energy accumulator is ensure that energy spikes of the building can be managed and it also provides a sufficient adjustment headroom for the system so that the heat recovery can operate at an optimal efficiency. A hot water accumulator, for example, is used as the energy accumulator.

An advantageous feature of the system according to the invention is based on the ability of the system to adjust itself in regard to the amount of usable lost energy, the operation of the heating system of the building and the efficiency slope of the system itself. The system monitors the amount of energy in the external units or other recovery units, controls the heating requirement of the building and temperature level of the heating circulation as well as constantly adjusts itself to an optimal efficiency. Here, optimal efficiency means as large savings in Euros as possible in heating and electricity costs, considering the current energy costs. The energy accumulation of the system is optimized to work according to the spikes of the building systems, taking the outdoors temperature and seasons into consideration.

The main components of the system are: the external unit (figure 3), located e.g. at the end of the collector duct system on the roof and the internal unit (figure 4) preferably located in the heat distribution room. Both units are provided with an adjustment center where the adjustment unit SK2 of the internal unit of the heat distribution room is the master and the adjustment unit SK1 of the external unit is the slave. Preferably the system is designed so that a number of separate external units can be connected to one internal unit, i.e. the heat distribution room unit.

The external units can comprise two different main types. The first of these is provided with a fan and the second model is without a fan.

The model provided with a fan is meant for locations having an operating common duct fan (usually residential apartment buildings built between 1965 and 1995), whereby it is not reasonable to change. The common duct fan is connected to the adjustment center of the first type, whereby the fan is controlled by the new adjustment center. In the external unit of the first type there also is an LTO radiator, filter, control and adjustment valves and, if necessary, a shut-off damper with its actuator. The shut-off damper closes if the fan stops. The pressure loss over the filter is measured and in case the limit value is exceeded, the adjuster sends a message that the filter must be changed. The adjustment center of the external unit monitors the operation of its components and the amount of usable lost energy, adjusts the above-mentioned components if necessary and reports the situation to the adjustment center of the internal unit. The issues to be reported can be alarms, services and measurements.

The model with the fan is for apartment buildings with natural ventilation (usually built between 1900 and 1965) and it is in other parts the same as the unit without a fan except that it also comprises a fan provided with an EC motor. The fan is controlled by the adjustment center of the external unit. The adjustment center measures the duct pressure changes and instructs the fan on what power it should operate. The adjustment center can also be provided with a time program. The adjustment center of the external unit works on the slave principle with the adjustment center of the internal unit (master). All controls of the external unit can be adjusted via the adjustment center of the internal unit.

From the external units extend LTO pipelines, condense water drain, electric cable and a bus cable for the communication between the control units. All pipes and cablings are directed inside the structure, shielded by the external unit.

Primarily the internal unit is located into the heat distribution room in connection with the heat distribution center. In buildings using district heating this is a so-called district heating packet. In systems using combustion energy the unit is located in connection with the adjustment valves of the heating system. The unit can also be arranged separately from the rest of the heating system of the building. In this case the pipeline must be taken from the internal unit to the adjustment valve group of the heating system of the building.

The internal unit is always dimensioned to fit the building. Usually the internal unit is an apparatus about the size of a high refrigerator, so the footprint needed by it is relatively small. The compressor or compressors (depending on the adjustment need and compressor type of the system) are located in the bottom of the apparatus. The middle portion houses the exchangers, pumps and expansion apparatuses on both sides of the cold circuit. The upper portion houses the adjustment valves and connection points for the energy recovery sources.

The middle portion of the apparatus also houses the electric and adjustment center into which all instrumentation, adjustment messages and electric connections are taken. A control panel is located on top of the center. The control panel can be used for monitoring the operation of the apparatus, any alarms or service messages, viewing the data of measuring or control points and, if necessary, for adjusting or by-passing various functions.

An energy accumulator can be arranged in connection with the internal unit, the purpose of the accumulator being to smooth the energy spikes of the building and to provide a necessary adjustment headroom so that it can operate with the best possible efficiency.

Adjustment center SK1.1 is located in the external unit when the external unit is provided with its own fan as well as an adjustment center SK2.1 when the unit controls an existing exhaust fan. The main task of the unit is to measure and monitor the operation of the external unit and the available amount of lost energy. The operation of the external unit comprises all components of the unit: fan, filter and shut-off damper. The measurements comprise a number of temperatures, pressure differences and humidity measurements. The centers of the external unit or units are in connection with the adjustment center of the internal unit SK21. The centers operate on the principle of external unit SK1.1/SK1.2 being the slave and the internal unit SK2.1 being the master.

The adjustment center of the heating packet is connected to the adjustment center SK2.1 of the internal unit via bus, if possible. Subsequent to this the old adjustment center becomes SK2.2 and it operates as a slave to SK2.1 (master). SK2.1 controls and reads all necessary measurement points of SK2.2. The adjustment center SK2.1 monitors the operation and energy requirement of the heating system of the building, the operation of the external units and the amount of energy available to them, the charge level of the energy accumulator and the operation of the internal unit itself. With the above-mentioned monitoring points the adjustment center SK2.1 of the internal unit can optimize the operation of the system so that it operates with the best possible efficiency. In this case the best possible efficiency is measured as energy consumption costs of the building as savings in Euros, i.e. the optimization utilizes data about the prices of energy forms. The efficiency is controlled by adjusting the temperature, controlling the accumulation level of the energy accumulator, adjusting the running or power of the compressor and by selecting where the recovered energy can be transferred with the best efficiency.

In the following some exemplary embodiments of the invention are described in more detail.

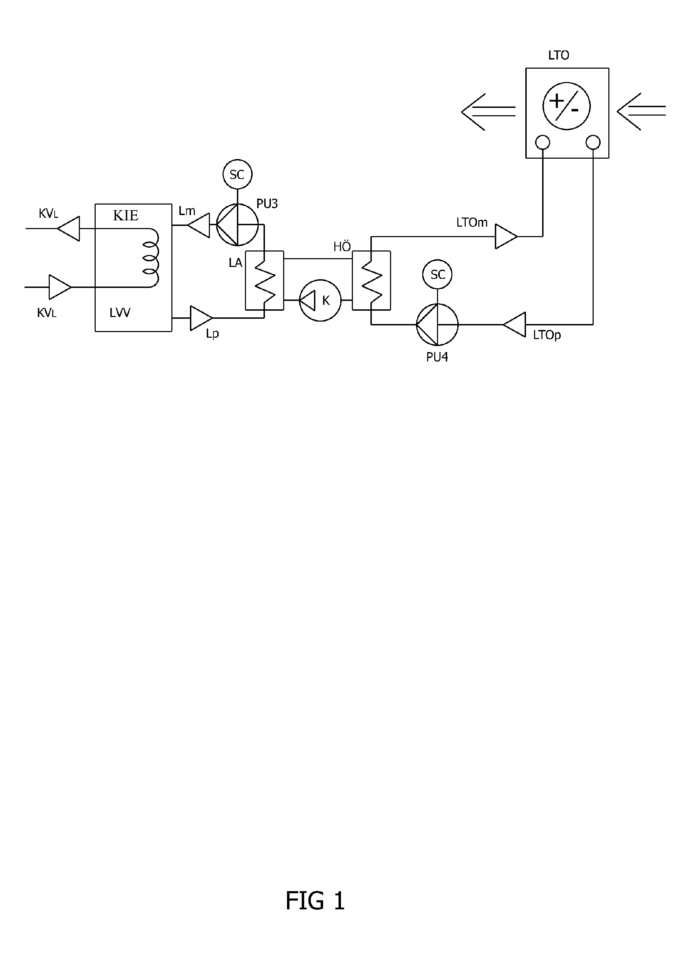

Figure 1 illustrates the principle of the invention as an example, comprising one heat recovery unit with connections to the building network not shown.

A heat exchange spiral is located in the hot water accumulator LVV, with cold water inlet KVm leading into the spiral and cold water outlet KVp leading away from the spiral. A condenser exchanger LA is connected in parallel with the hot water accumulator LVV, with heat inlet Lm leading from the exchanger via pump PU3 to the upper part of the hot water accumulator LVV and to where the heat return line Lp returns from the lower part of the hot water accumulator LVV. The evaporator exchanger LA is connected via compressor K to the vapour exchanger HÖ, into which a return line leads from the condenser exchanger LA. Heat recovery outlet line LTOm leads from the vapour exchanger HÖ to the heat recovery apparatus LTO, in this case describing a simplified external unit. A return line LTOp comes from the heat recovery apparatus LTO to the evaporator HÖ via pump PU4.

As can be seen from Figure 1, the energy of the LTO circuit is essentially only recovered by means of the said evaporation/compression cycle, i.e. into one circuit, wherefrom it is further distributed to the needs of the building. This solution provides a more efficient utilization of heat energy than before as well as simpler adjustment.

The exhaust air of the building is transferred through the LTO radiator of the external unit. In the LTO radiator the energy contained by the air is transferred by lamellae and pipes to the liquid flowing inside the LTO radiator. The liquid can be glycol or other suitable heat exchange medium. The pump PU4 circulates the liquid through the radiator and transfers the liquid to the evaporator exchanger HÖ. Refrigerant is provided on the other side of the evaporator exchanger HÖ, the refrigerant being vapourized and reducing the temperature of the liquid in the LTO pipe circuit. Subsequent to this the LTO circuit returns the liquid via liquid outlet pipe LTOm back to the LTO radiator, wherefrom it can again absorb energy from the exhaust air. After evaporation the refrigerant is transferred by means of partial vacuum to the compressor K. The compressor K increases the pressure of the gas, causing compression in the gas, thus releasing heat. The gas is transferred into the condenser exchanger LA. Heating circuit pipeline is provided on the other side of the condenser exchanger LA, into which the energy contained by the refrigerant is transferred. This causes the refrigerant to condense into liquid. The refrigerant is again transferred into the evaporator exchanger HÖ and the process is repeated. The energy transferred into the heating circuit is transferred via the heat inlet pipeline Lm to the upper portion of the hot water accumulator LVV by means of the pump PU3. Simultaneously a similar amount of liquid is taken from the lower part of the hot water accumulator LVV and is transferred via pipe Lp to the condenser exchanger LA. A spiral runs in the upper part of the accumulator. The lower part of the spiral is connected to the cold water pipeline KV entering the building, from which water hot water is provided. The water is preheated by means of the spiral. The upper part of the spiral is connected to the pipeline KV1 transferring the preheated cold water to the district heating exchanger in which the final heating is performed.

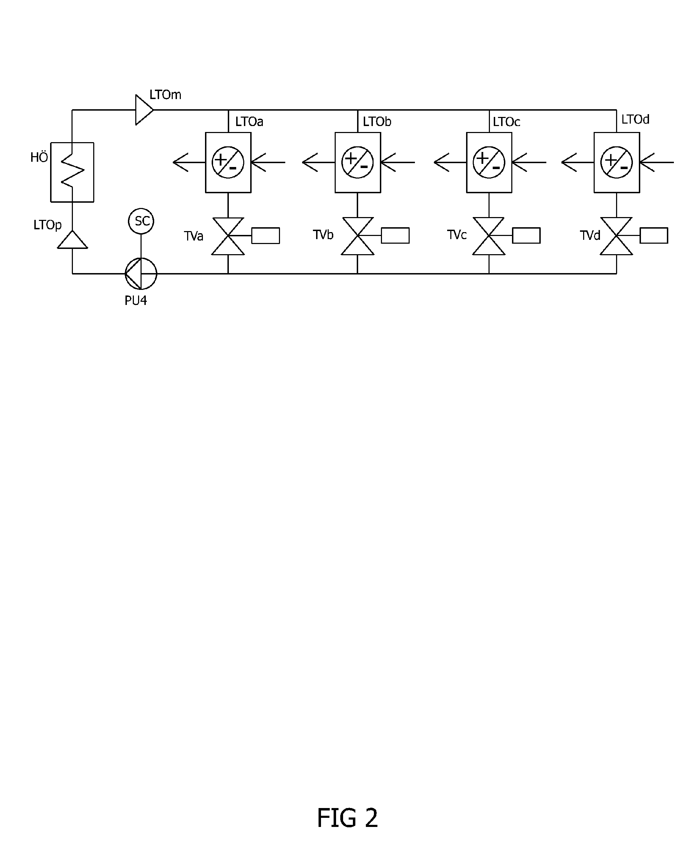

A system using a number ofLTOs:
One of the main principles of the system is its scalability. A number of LTO radiators can be connected in parallel to the same LTO circuit according to Figure 2. Each LTOp pipe (before evaporator) is provided with an adjustable two-way valve TV. When this valve TV is tightened, the flow through the radiator behind the valve is reduced. When the valve is closed, the radiator is not in use. This arrangement allows producing various flows with various temperature levels for the evaporator exchanger HÖ. The reference flow and reference temperature for the evaporator exchanger is calculated by the controller of the system. The controller automatically calculates the reference values that are always in connection with the current heating and hot water requirement of the building. The controller controls the pump PU4 driven by a frequency motor, the pump providing the reference flow to the evaporator exchanger HÖ, as well as valves TV, the change of which allows adjustment of the reference flow and temperature in the liquid.
The aim is to adjust the system to achieve as good an efficiency as possible. Here efficiency means as large as possible savings in the total energy costs of the building.

As disclosed in figure 2, this solution also preferably only comprises one evaporator/compressor circuit, whereby heat recovery is centralized and effective.

The exhaust air of the building is directed through the LTO radiator LTO. Subsequent to this it turns into used air which is expelled into the atmosphere. The exemplary unit of figure 3 comprises a fan PF being run with a motor EC. The heat recovery unit LTO is on the inlet side of the fan and flow channels or filter spaces are provided on both sides of the unit LTO with sufficient sensor equipment for measurements M1 and M2. The heat exchange liquid arrives at the heat transfer unit LTO along line LTOm and it is directed away along line LTOp. The exhaust line LTOp also comprises sensor equipment M3 for e.g. measuring the temperature. The meters M1, M2 and M3 as well as the electric motor EC are provided with lines to the adjustment unit SK1.

Air is moved by means of fan PF that can be an existing fan of the building or it can be delivered with the external unit. If the fan is delivered with the external unit, the fan is preferably a model equipped with an EC motor. The EC motor is a variably adjustable DC motor. If there are no clear running times in the building or there is desire to change the existing running times, this can be done in connection with the installation of the external unit. The EC motor can provide 0 - 100% of the nominal power for 24 hours or according to some measurement point. If an existing fan is used, it is connected to the adjuster of the external unit, whereby the old fan is also controlled via the external unit. In case of old fan, the running times can be adjusted according to the time of the day, the power adjustment depends on the model and dimensioning point of the old fan. The old level can, however, always be maintained. The adjuster of the external unit controls the operation of the fan PF. The adjuster also measures the temperature of exhaust air and the relative humidity at measurement point M1. It also measures the temperature and relative humidity of used air at measurement point M2. The adjuster also measures the pressure difference over the LTo radiator and the PF fan. The pressure difference provides information about the volume of air passing through the LTO radiator. Temperature and humidity measurements can be used for calculating enthalpy that provides information about the energy per unit of air volume there is before and after the radiator. By means of this, the liquid flow in the radiator can be optimized using a pre-determined algorithm. The adjuster unit can also predict the air volume changes of the fan PF if the fan operates on the basis of time program. The adjuster unit is called SK1.1 if the external unit is provided with a fan and SK1.2 if there is an existing fan in the building that will be used in the system. SK1 is connected with the adjuster of the internal unit SK2 so that SK1 is slave and SK2 is master. SK2 can read all measurement data from SK1 as well as direct SK1 and provide it with setting values.

The main object of the internal unit is to combine inside the same structure all components of the system that need not be installed in connection with or over the existing network. The lower part of the internal unit contains the compressor/s K. Heat exchangers LA and HÖ are located in connection with the compressor. The expansion apparatuses of the glycol circuit, in this case an LTO circuit, are installed in the internal unit. The unit contains the necessary pumps, valves, safety means, sensors, meters and pipelines needed for the system (not shown here). It is possible to connect a number of external units to the internal unit. In figure 4 the interface a. describes a corresponding interface in Figure 3 and interfaces b., c. and so on describe the interfaces of any following heat exchangers. The valves TVa ... d controlling the connection and adjustment of the external units/heat exchangers LTO are connected inside the internal unit. The upper portion of the internal unit contains the electric center and the adjustment center. The electric unit contains all actuator and safety means needed for the operation of the components of the internal unit. The adjustment center contains the adjuster SK2.1 as well as connection points for all low voltage components, meters and sensors. The adjustment center also comprises the necessary connections for SK1.1 - 2 adjusters and for the adjusters of the heat center.

When considering the initial situation, for example a conventional district heating unit for transferring the district heating to be used by the building, the system according to the invention can be integrated as follows. The cold hot water KV1 being directed from the trunk line of the cold water to the heat unit is instead directed via the spiral KIE located in the system. Water is preheated by means of the heat energy of hot water accumulator LVV. Subsequent to this the preheated cold water is directed to the heat unit. Before the spiral a branch is taken from the cold water pipe KV to be connected to the pipe going back to the heat unit after the spiral. A three-way valve TV3.3 is provided in the connection point for bypassing the spiral KIE and the cold water can be directed straight to the heat unit. This will ensure that the return water KLp of the district heating always gets the cooling agreed with the heat provider. The return water of the heating circuit is branched. A three-way valve TV3.2 is installed in the new branch. A new branch exits the valve and makes a circuit via the exchanger LS3 of the new system. The heat exchanger LS3, also acting as the condenser LA of the system, can be installed either in branch a LS3(1) of the valve, whereby all water passing through the valve is directed via the heat exchanger LS3. Another option is to install the exchanger LS3(2) into the inlet branch c, whereby the water circulated via the valve flows through the exchanger. The installation method depends on the dimensioning of the system. It mainly depends on how long periods of energy accumulation are designed to be carried out before transferring energy to the heating network of the building. The circulation water is taken from the lower portion of the hot water accumulator LVV, where the water is coldest and after the heating the water is transferred to the upper portion of the accumulator. Valve TV3.1 is installed in another branch of the return water of the heating circuit, whereby the system can be completely by-passed, if necessary. It can be taken 100% in use or the valve can be used for making a mixture of the return water of the 1 circuit and the water circulated via the system.

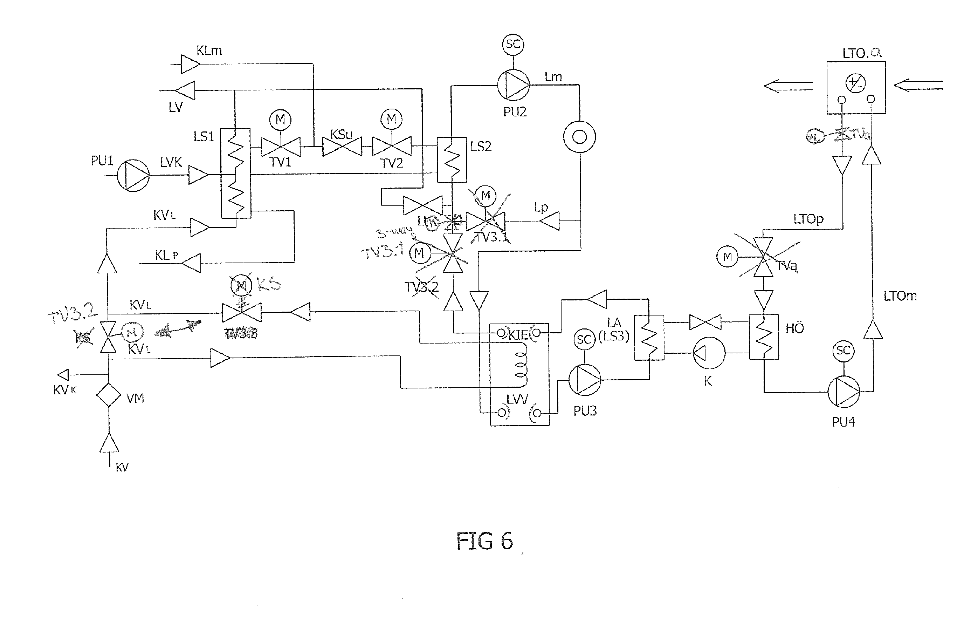

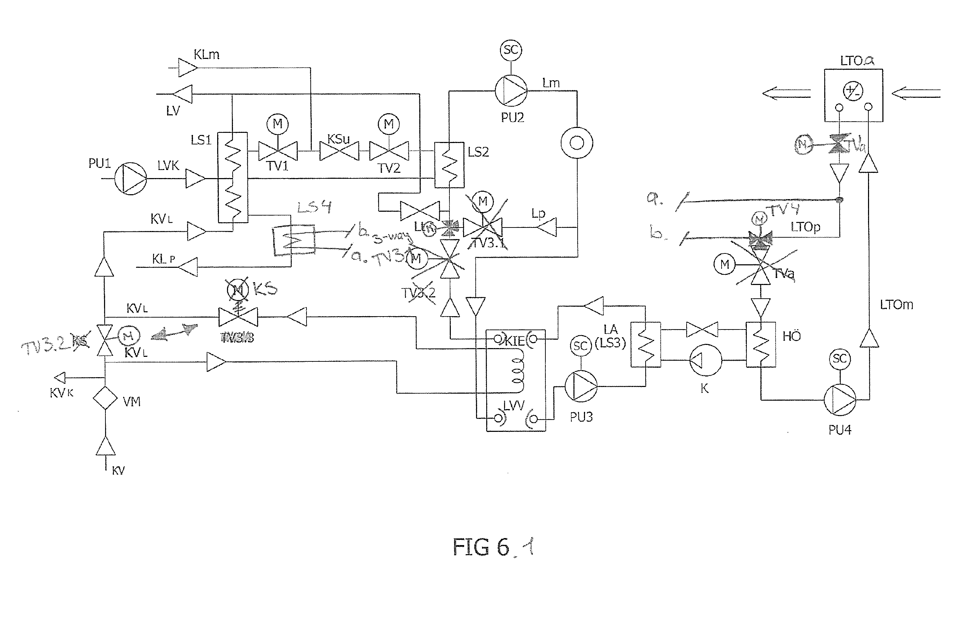

The system can be integrated with a district heating unit (aftercooling or other connection) in another way as well (Figure 6). The initial situation is the same in both connection methods. The main difference between the connections is that a dedicated circuit is provided for the heating circuit water after the condenser, the circuit running through condenser LA by means of pump PU3 to the accumulator LVV and from there back to the condenser LA. The circuit is adjusted by means of the infinitely adjustable pump (SC frequency converter). Another clear difference in the connection is that the accumulator LVV of the heating circuit comprises four connection points instead of three. Should there be a desire to heat the return water Lp of the heating circuit after circuit L, this water is taken to the lower portion of the accumulator and a similar amount of water is taken from the upper portion of the accumulator to replace it. As the aim is to maintain a temperature layering in the accumulator LVV, the water in the lower part is colder than that in the upper part. Subsequent to this the preheated return water of the heating circuit is taken back into the district heating heat exchanger LS2 by means of which the final heating can be carried out, if necessary, and the water can be returned to the heating circuit L circuit. The return side water of the heating circuit is controlled by means of a three-way valve TV3.1, wherefrom all water can be directed from either outlet branch or a mixture can be made. One three-way valve can provide the same functionality as two valves, the use of which is an alternative solution. The choice of valve depends on dimensioning. The preheating of cold water is controlled by means of a valve TV3.2. The losses of the spiral and the valve TV3.2 and the extra branch are added and some extra pressure loss is added thereto. These pressure losses are provided by means of a single adjustment valve KS. This creates a situation in which cold water is always routed through the spiral, if the valve TV3.2 is fully or partially open. The flow is restricted by means of valve TV3.2 so that it never exceeds the nominal flow of the spiral, but if the flow of the hot water exceeds the nominal flow of the spiral, the missing flow volume is taken directly from the "difficult route" of the cold water.

Glycol flows as heat exchanger medium in the heat recovery circuit, the glycol flowing by means of pump PU4 along inlet pipe LTOm to the radiator/heat exchanger of heat recovery LTO.a. The flow of warm exhaust air of the building passes through the radiator. The exhaust air flow delivers its heat to the glycol circuit running along outlet pipe LTOp to the evaporator HÖ of the cold circuit. The temperature level of the refrigerant is increased by means of compressor K so that the water on the other side of the condenser LA (LS3) can be heated to a considerably higher temperature than the temperature of the glycol flowing in the LTO recovery circuit. With the commercially available refrigerants 407 and 410 it is possible to form liquid in the temperature up to 60°C on the water circuit side of the condenser LA (LS3) by using conventional, simple methods. With cascade pumps or other heat pump solutions the temperature of the liquid can be increased above this but often there are other disadvantages in the system (price, problems with the CO2 refrigerant and so on) that make the use of them not necessary or not reasonable. The heat recovery system according to the invention takes into account the temperature level of the available heat energy and tries to transfer the energy via the hot water accumulator LVV back into the heating circuit and into the hot water so that the temperature difference between the used heat exchange liquid and the solution (preferably water) into which the energy is transferred, is as large as possible. This increases the total efficiency of the system. Water is a preferred liquid for accumulating heat energy due to, among other reasons, it being non-toxic. Hot water accumulators are also readily available.

Some advantageous embodiments of the invention utilize a hot water accumulator especially suitable for this solution. A connection is provided at the lower portion of the hot water accumulator for hot water outlet and water is pumped therefrom through the evaporator LA (LS3) by means of pump PU3. As has previously been stated, at best the liquid can be heated to a temperature of about 60°C. The temperature of the liquid depends on the flow of the pump, the available evaporator LA (LS3) power in the exchanger and the temperature of the liquid to be heated, i.e. the temperature of the water taken from the lower portion of the accumulator. The pump PU3 returns the heated liquid (water) back to the upper portion of the accumulator. The accumulator LVV has flow smootheners in connections for avoiding forming turbulent flows and liquid mixing inside the accumulator. This helps in forming a layering in which the upper portion of the accumulator is much higher than that of the lower portion.

The middle portion of the accumulator is provided with a spiral KIE for heating hot water KV, the spiral being dimensioned separately for each project. The purpose of the spiral KIE is to heat the liquid passing through the spiral so that colder water enters via the lower connection of the spiral, where the liquid of the accumulator is colder due to layering. As the liquid moves along the spiral and rises to the upper part of the accumulator, the liquid in the spiral is heated. As there is warmer water in the upper portion of the accumulator, the temperature difference between the liquid inside the spiral and the liquid contained by the accumulator has always remained sufficiently large and a good heat exchange efficiency is maintained throughout the whole length of the spiral.

There's also a possibility to release heat from the accumulator back to the heating systems of the building by means of two other connections. Two connection points are provided on the same height point but on a side different from that having the connection points for circuit run by the pump PU3, the connection points being also provided with flow smootheners. When the heating system is connected as a part of heat recovery, it should be noted that the liquid from this system will be used directly in the circuit of the pump PU3 and it will be circulated through the evaporator LA (LS3). This is not a problem as generally the whole heating system is a radiator, floor heating, convector or air-water heating network utilizing normal water. Generally, the temperature level of the water to be used is: 70/40, 60/30, 35/25°C and so on and thus it is very suitable for this use and for heating with the water of the hot water accumulator. It can, as such, be contemplated that an accumulator using another heat exchange medium be used, but in this case the costs will probably increase due to the more complex structure and more expensive heat transfer medium.

The main advantages of the above-mentioned connection principle are:
1. The are no extra intermediate circuits in the connection, thus increasing the total efficiency.
   a. An existing heating system is used as the energy recovery liquid
   b. If the evaporator HÖ of the LTO circuit is transferred directly to exhaust air, the total efficiency can be increased but it prevents connecting a number of external units to the internal unit (the cold circuit), which is feature of an important embodiment of the invention.
2. The pump PU3 runs independently and even though it uses the liquid of an existing system, it does not have an effect on the operation of the system. In other words, the recovery apparatus can be run and energy can be recovered into the hot water accumulator LVV regardless of whether there is a need for the energy just then.
3. There are no extra exchangers in the system, which - in addition to increasing the total efficiency - also allows storing energy (according to point 2) when it is available, and the energy level of the hot water accumulator LVV can be discharged totally independently of the recovery system.

It is essential for the invention that the recovered heat be transferred only into the energy accumulator, whereby there's no effect at all on the operation of other hot water systems of the building. Thus all recovered heat energy is transferred into the energy accumulator and discharged fully independently of the recovery, according to the current need of the building.

The following description explains why the system according to the invention is especially suitable for use as a secondary system by means of which energy is transferred back to the primary heat systems of the building. Primary system can be considered to be the system that is supposed to arrange the liquid temperatures of the systems using energy to the dimensioned level. The primary system can be dimensioned to be 100% of the total requirement or only a part of the total requirement. In this case the secondary system is the heat recovery system according to the invention taking into account the total energy requirement but being unable to totally fulfill it in at least all conditions. The main reason is that the exhaust air only contains a part of the energy requirement needed by the building, but the secondary system according to the invention is not necessarily capable of reaching in all seasons the temperature levels dimensioned for the heating systems of the building. The missing heating portion is always taken care of with the primary system.

Let's suppose the building has a primary heating form available (such as district heating, oil heating or a geothermal heat pump), the system being then the primary system. The recovery system according to the invention is a secondary system. In old buildings the primary system is usually dimensioned to produce 100% of the total energy requirement, which is advantageous, because it allows shutting down or servicing the secondary system while being able to produce 100% of the energy requirement, if necessary.

The spiral KIE is especially suitable for preheating hot water. In Finland, the usual temperature of the water in the property water pipe is 5 to 10°C. In the accumulator the liquid temperature is, depending on the energy charge level, from 35 to 60°C. Two T branches KV_{L} are made to the water pipe branching off from the main water pipe to the building heating packet for heating. From the first T branch, seen in the flow direction, the pipe is taken and it is connected to the lower part of the spiral KIE of the hot water accumulator LVV. The other T branch is connected with the upper part of the spiral KIE. Two-way valve TV3.2 is arranged between the T branches. When the two-way valve is closed, all water flows though the spiral KIE. By placing a single adjustment valve KS between the upper part of the spiral and the upstream T branch and adjusting pressure loss project-specifically therein so that when the two-way valve is open, all water passes by the spiral KIE via the two-way valve TV3, allows that should the valve break, lose electricity or control, the building will get the required warmed hot water despite the malfunctions and there is no situation where something could fully block the flow of hot water. As the missing heat requirement is carried out by means of the primary heating system, this water is always at the correct temperature level after the primary heating. By steplessly adjusting the valve we can control how large a portion of water is preheated via the spiral KIE and how large a portion goes directly to primary heating. The advantages of this connection include the fact that with district heating post-cooling connection (Fig. 6) it is always possible to guarantee that the cooling of the district heating water agreed on between the building and the district heat plant always takes place.

Other advantages are achieved by directing the colder water to the lower portion of the hot water accumulator and by taking the preheated water from the top, thereby also achieving an optimal temperature difference for the heat transfer. This issue has also been described earlier.

The connection also takes into account the best way of returning energy to the heating system of the building. The primary system used in the building (district heating, oil, pellet, electricity, geothermal heat) usually has an effect on the dimensioning temperatures of the heating system (radiators 80/40°C, 70/40°C, floor heating 35/30°C and so on). As the recovery system according to the invention produces at its best liquid at a temperature of about 60°C, the method of returning the energy to the heating should be carefully considered so that the temperature levels are optimal for the total efficiency. Because of this the warm return water Lp after the heating network is the best application. The temperature of the return water depends on three issues:
1. what is the dimensioning temperature of the system?
2. what is the cooling of the network?
3. what is the outdoors temperature? (Because generally the water of heating networks is adjusted in relation to the outdoors temperature.

Two T branches are made to the return water Lp of the heating. The first (in the flow direction of Lp) branch is connected to the lower portion of the hot water accumulator. The second T branch is connected to the upper portion of the accumulator. A three-way valve TV3 is arranged in the position of the second T branch. This valve allows to decide whether the return water Lp from the heating is directed via the accumulator or directly to primary system, such as to the heat exchanger of the district heating system.

Because both connection points of the accumulator LVV are provided with flow smootheners, a temperature layering is formed in the accumulator. The purpose of the flow smootheners is to prevent turbulence and mixing. The do not, however, prevent flows within the accumulator. Thus, when warm water is created to the upper portion of the accumulator by means of the pump, it is almost immediately available to be used (according to test results only about 1°C colder) by the heating network. The colder water remains in the lower portion of the accumulator and it is directly available for use by the condenser LA (LS3). The colder water at the condenser LA (LS3) increases the efficiency of the cold circuit, because the smaller the difference between the temperature levels of the condenser LA and the evaporator HÖ (lower pressure in the cold circuit) is, the better the total efficiency of the process is.

This connection principle provides a number of advantages over other solutions. In addition to utilizing the above-mentioned temperature levels the connection is very reliable in use. If the recovery system is switched off or it is being serviced, the only difference noted in the building will be the energy bill. The primary heating takes place completely using the primary energy system of the building (supposing that the primary system of the building is dimensioned to be 100% of the maximum energy requirement, otherwise the recovery system cannot be serviced during extremely cold weather when the energy requirement is high). The connection also reduces the need for heat exchangers and extra pumps. The pump PU2 of the heating network is sufficient to circulate the liquid of the heating circuit via the accumulator LVV as well, as 2 T branches, a valve and some metres of pipe do not cause large pressure losses large enough for the existing pump to be insufficient. The accumulator itself does not cause any losses. The pressure losses of the condenser LA (LS3) are taken care of by PU3. Pumps PU2 and PU3 can operate totally independently of each other. Thus the recovery system can operate also in the summer, when the heating system is not in use. In the summer energy can be transferred into the hot water.

The valve TV3.1 is used for determining whether the heating return water is circulated via the accumulator or whether it is directed directly to the primary system. With the stepless adjustment of the valve it is possible to circulate only a portion of the liquid of the return water via the accumulator. This allows carrying out the energy recovery and storage totally independently of whether the recovered energy is used at that moment or not. The system also operates on an excellent efficiency, if energy is recovered and discharged simultaneously into the heating or cold water circuits, as the connections take the temperature levels into consideration.

Because the recovered energy can be transferred both into hot water and the heating network as needed and it can be steplessly controlled with valves TV3.1 and TV3.2, it is possible to guarantee, in case the building has a district heating agreement, that the cooling values for the district heating network are always achieved.

The following describes a connection according to Figure 6.1, wherein the missing evaporator power of the exhaust air recovery is compensated for by taking energy from the return water of district heating.

In conventional residential apartment buildings with a mechanical exhaust air ventilation there are usually two operation points for roof fans located on the roof and serving the building at full power or partial power. The partial power is in use most of the time and full power is only used in times when it is supposed that there is much cooking or washing going on in the building. One of the challenges of the cold system is to dimension the cold apparatuses to be capable of optimal operation on both conditions. Dimensioning of the LTO radiator, the condenser radiator as well as the evaporator radiator is difficult to optimize into two totally different points of operation, as the level of energy in the exhaust air changes considerably in partial and full power situations. For example, the common division of half power 50% - full power 100% air flow is widely used. The temperature and humidity of the exhaust air also have an effect on the amount of available energy. Because in a cooling apparatus the power varies greatly according to the temperature levels, changes in the solution temperatures of the condenser LA (LS3) change the operation points of all exchangers (LTO.a, HÖ, LA (LS3)).

It is not reasonable to dimension an adjustable cooling circuit into a residential apartment building because it is expensive and the advantages brought by it can be unremunerative in relation to the additional investments, e.g. inverter-compressor, digital scroll system or some other adjustable compressor apparatus. If the cold system is dimensioned so as to be too small, there won't be enough savings to cover the investment. In that case all available energy is not recovered from the exhaust air. On the other hand, too large a system doesn't work if the cold circuit cannot evaporate a sufficient amount or refrigerant (the power of the evaporator being too small, i.e. the LTO circuit does not produce enough energy for the evaporator, i.e. the heat exchanger radiator of the heat recovery apparatus LTO.a does not sufficiently heat the LTO circuit. As conditions, such as the temperature levels of the heating system, the energy contained by the exhaust air (temperature, humidity) vary during the year, it can be advantageous to dimension the heat pump so as to be rather large, whereby it can operate for the most of the year anyway. The COP of heat pumps in this application is usually from 2.5 to 3.5. The COP depends on the temperatures on the secondary side of the cold circuit. Energy prices are, however, usually such that the price of heating energy is more than 50% of the price of electric energy. In practice this means that the system produces savings even with a COP of 2.5. This means that it is advantageous to keep an excessively dimensioned system running as much as possible with a bad COP as well, as this produces the highest savings possible.

The following describes a system allowing the use of a larger heat pump system and increasing the amount of its operation hours. The system is formed as a part of the energy recovery system of Figure 6.

When the cold circuit is dimensioned to be so large that in some times of the day or the year the LTO.a radiator cannot provide it with a sufficiently warm solution, either the LTO.a radiator starts to freeze (can be avoided by stopping the cooling apparatus) or the evaporator power HÖ is not sufficient. This closes the operation of the heat pump until enough energy for the running of the heat pump has again been accumulated in the LTO circuit or radiator. In other words the LTO circuit does not in this situation have sufficiently energy for keeping the heat pump running long enough. This can be rectified by utilizing the warm district heating return water for the additional heating of the heat pump solution. In this case the recovery solution is first heated in the LTO radiator and the missing energy portion is subsequently taken from the inlet of the district heating.

The connection can be realized e.g. as shown in Figure 6.1 by connecting a heat exchanger LS4 to the return line KLp of the district heating, the outlet side of the exchanger being connected to the return line LTOp of the heat recovery and the inlet side via the three-way valve TV4 to a branch of the same return line LTOp going to the evaporator HÖ.

By circulating the return water LTOp through the heat exchanger LS4 the temperature level of the glycol circuit can be increased sufficiently for achieving the evaporation power HÖ needed by the cold circuit in the exchanger. This allows keeping the cooling plant running longer and recovering energy from the exhaust air radiator LTO.a in conditions where this would not otherwise be possible. The heat exchanger LS4 can be any suitable simple exchanger, such as an exchanger installed on the surface of a pipe without interfering with the pipe KLp. With this circuit, the so-called glycol primary heating would be easy to carry out with a small amount of piping, a simple exchanger and one three-way valve TV4. The solution is also cost-effective. The district heating plant (depending on the type of the plant) gets the advantage of better KL cooling in the district heating return pipe KLp. When the recovery system is capable of operating more hours per year, the energy cost savings can be increased.

## Claims

1. A method of recovering lost energy in buildings, the method comprising
- recovering heat energy by means of at least one heat recovery apparatus (LTO) arranged in the exhaust air flow of the building,
- directing the recovered heat energy into the hot water system of the building by means of a heat exchange medium, and
- transferring the recovered heat energy via at least one evaporator (HÖ) through an evaporation/compression cycle to heat the water used in the building,
**characterized in that**
- all recovered heat is transferred into an energy accumulator (LVV), and
- the heat energy needed by the hot water system of the building is taken from the energy accumulator.

2. A method according to claim 2, **characterized in that** a hot water accumulator (LVV) is used as the energy accumulator and that heat energy is transferred into the hot water accumulator by circulating the water of the hot water accumulator, without mixing the heat exchange medium of the heat recovery apparatus into the water.

3. A method according to claim 2, **characterized in that** heat energy is transferred from the heat recovery apparatus (LTO:a) to the hot water accumulator (LVV) by circulating hot water accumulator water through the evaporator (HÖ) of the heat recovery apparatus.

4. A method according to claim 3, **characterized in that** the evaporator (HÖ) of the heat recovery apparatus (LTO:a) is provided with water from the lower portion of the hot water accumulator (LVV) and the heated water is returned to the upper portion of the accumulator.

5. A method according any of the previous claims, **characterized in that** an energy accumulator (LVV) is used as the center unit of the heat recovery, wherefrom the heat energy needed by at least the hot water system or heating system of the building is discharged as necessary.

6. A method according to claim 1, **characterized in that** heat energy is directed to an internal unit comprising the evaporator (HÖ) and an evaporation/compression cycle from at least two heat recovery apparatuses (LTO).

7. A method according to claim 1 or 6, **characterized in that** the heat recovery apparatuses are installed in a parallel connection.

8. A method according to claim 1, 6 or 7, **characterized in that** the internal unit is connected to the heating water circuit (L-circuit) of the building.

9. A method according to any of previous claims 1 - 8, **characterized in that** recovered energy is transferred according to an optimization program into at least one of the following: hot water accumulator (LVV), hot water of the building or heating water circulation (L-circulation).

10. A method according to any of claims 6 - 9, **characterized in that** the flow coming from at least two heat recovery apparatuses (LTO) to each heat recovery apparatus (LTO) is adjusted by means of a dedicated valve (TV) for adjusting the temperature of the heat exchange medium and the flow arriving to the evaporator (HÖ).

11. A method according to any of the previous claims, **characterized in that** the hot water accumulator (LVV) is charged in an optimized manner according to the dimensioned consumption profile of the building.

12. A method according to any of the previous claims, **characterized in that** the energy recovered by means of the heat transfer apparatus is transferred to heat the water used in the building solely via the said evaporation/compression cycle.

13. A method according to any of the previous claims in a building utilizing district heating, **characterized in that** heat energy is recovered from the return flow of the district heating into the circulation of the exhaust air recovery apparatus (LTO).

14. An arrangement for recovering lost energy in a building, the arrangement comprising:
- at least one heat recovery apparatus (LTO) for collecting heat energy from the exhaust air flow of the building,
- transfer means (LTOp, LTOm, PU1, HÖ) for transferring the recovered heat energy into the hot water system of the building by means of a heat exchange medium.
- at least one evaporator (HÖ), at least one compressor (K) and a condenser (LA), forming the evaporation/compression cycle, for transferring the recovered heat energy through at least one evaporator (HÖ) for heating the water used in the building,
**characterized by**
- an energy accumulator (LVV) for receiving the total amount of recovered heat energy, and
- means (LS2, KV_{L}, TV3.2) by means of which the heat energy needed by the hot water system of the building can be taken from the energy accumulator.

15. An arrangement according to claim 14, **characterized in that** the energy accumulator is a hot water accumulator (LVV), the lower portion of which is provided with a connection for taking heat for the evaporator (HÖ) of the heat recovery apparatus (LTO:a), and the upper portion of which is provided with a connection for returning the water warmed by the evaporator.

16. An arrangement according to claim 14, **characterized in that** liquid connections of the hot water accumulator (LVV) are provided with flow restrictors.

17. An arrangement according to any of claims 14-16, **characterized in that** the evaporator (HÖ) of the evaporation/compression cycle is connected only to the liquid circulation flowing through the energy accumulator.

18. An arrangement according to any of claims 14-17, **characterized in that** the arrangement comprises at least two heat recovery apparatuses (LTO) for directing heat energy to an internal unit consisting of an evaporator (HÖ) and an evaporation/compression cycle.

19. An arrangement according to claim 18, **characterized in that** the heat recovery apparatuses are connected in parallel.

20. An arrangement according to any of claims 14-19, **characterized by** means for transferring recovered energy into at least one of the following: hot water accumulator (LVV), hot water of the building or heating water circulation (L-circulation).

21. An arrangement according to any of claims 18-20, **characterized by** a dedicated valve (TV) arranged for each heat recovery apparatus (LTO) for adjusting the flow from at least two heat transfer apparatuses (LTO) arriving to an evaporator (HÖ) for adjusting the arriving flow and the temperature of the heat exchange medium.

22. An arrangement according to any of claims 14-21, **characterized by** an adjustment unit for optimally charging the hot water accumulator (LVV) according to a dimensioned consumption profile of the building.

23. An arrangement according to any of claims 14-22, **characterized in that** it is arranged to transfer the energy recovered by means of the heat transfer apparatus to heat the water used in the building essentially solely via the said evaporation/compression cycle.

24. An arrangement according to any of claims 14-23 in a system connected to district heating, **characterized by** a heat exchanger (LS4) connected to the return circulation of the district heating and the exhaust air recovery apparatus circulation.
